(19) Europäisches Patentamt
European Patent Office
Office européen des brevets

(11) EP 4 723 227 A1

(12) **EUROPEAN PATENT APPLICATION**
published in accordance with Art. 153(4) EPC

(43) Date of publication:
**08.04.2026 Bulletin 2026/15**

(21) Application number: **24815235.7**

(22) Date of filing: **16.05.2024**

(51) International Patent Classification (IPC):
***H01M 4/525*** *(2010.01)* ***C01G 53/00*** *(2025.01)*
***H01M 4/131*** *(2010.01)* ***H01M 4/36*** *(2006.01)*

(52) Cooperative Patent Classification (CPC):
Y02E 60/10

(86) International application number:
**PCT/JP2024/018155**

(87) International publication number:
**WO 2024/247751 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023087899**

(71) Applicant: **Panasonic Intellectual Property Management Co., Ltd.**
**Kadoma-shi, Osaka 571-0057 (JP)**

(72) Inventors:
- **TOGO Masakazu**
  **kadoma-shi, Osaka 571-0057 (JP)**
- **KAWAKITA Akihiro**
  **kadoma-shi, Osaka 571-0057 (JP)**
- **INOUE Katsuya**
  **kadoma-shi, Osaka 571-0057 (JP)**
- **OGASAWARA Takeshi**
  **kadoma-shi, Osaka 571-0057 (JP)**

(74) Representative: **Novagraaf International SA**
**Chemin de l'Echo 3**
**1213 Onex, Geneva (CH)**

# (54) POSITIVE ELECTRODE ACTIVE MATERIAL FOR NON-AQUEOUS ELECTROLYTE SECONDARY BATTERY AND NON-AQUEOUS ELECTROLYTE SECONDARY BATTERY

(57) Provided is a positive electrode active material that enables an improvement in durability of a non-aqueous electrolyte secondary battery. This positive electrode active material included in a non-aqueous electrolyte secondary battery comprises a lithium transition metal composite oxide. The lithium transition metal composite oxide contains Ni, Ca, and Sr, and contains secondary particles that are formed by agglutination of primary particles. In an element concentration distribution of a cross-section of the lithium transition metal composite oxide as determined using time-of-flight secondary ion mass spectrometry, the ratio $I_{Sr_OUT}/I_{Sr_IN}$ of the normalized intensity $I_{Sr_OUT}$ of Sr in the surfaces of the secondary particles to the normalized intensity $I_{Sr_IN}$ of Sr inside the secondary particles is greater than the ratio $I_{Ca_OUT}/I_{Ca_IN}$ of the normalized intensity $I_{Ca_OUT}$ of Ca in the surfaces of the secondary particles to the normalized intensity $I_{Ca_IN}$ of Ca inside the secondary particles.

Figure 1

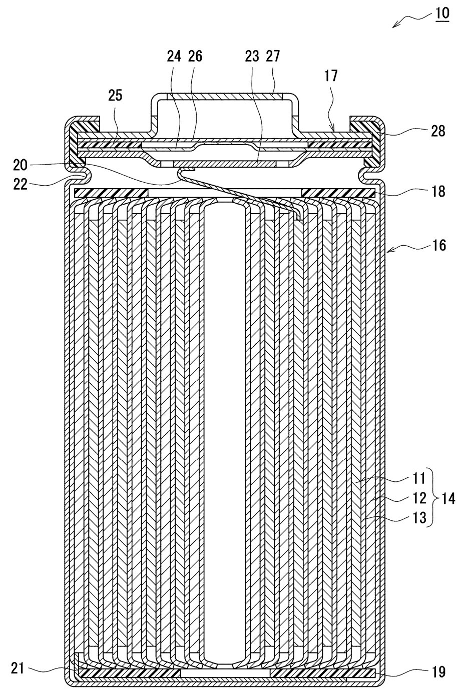


EP 4 723 227 A1

## Description

### TECHNICAL FIELD

The present disclosure relates to a positive electrode active material for a non-aqueous electrolyte secondary battery and a non-aqueous electrolyte secondary battery.

### BACKGROUND ART

Lithium nickelate ($LiNiO_2$) has been known to have a high energy density, and battery characteristics such as durability can be improved by partial substitution of Ni with Co, Al, Mn, or the like.

Patent Literature 1 discloses a technique for improving the charge-discharge cycle characteristics and safety of a secondary battery by using a positive electrode active material in which Sr forms a solid solution in an NCM-based lithium transition metal composite oxide containing Ni, Co, and Mn at a predetermined ratio.

### CITATION LIST

### PATENT LITERATURE

PATENT LITERATURE 1: Japanese Patent No. 6226430

### SUMMARY

Since a lithium transition metal composite oxide having a Ni content ratio of greater than or equal to 70% is likely to cause a side reaction with a non-aqueous electrolyte, the battery capacity is likely to decrease due to repeated charge and discharge, and the durability may become a problem. The technique described in Patent Literature 1 does not examine the improvement of battery characteristics using a lithium transition metal composite oxide having a high Ni content ratio, and there is still room for improvement.

An object of the present disclosure is to provide a positive electrode active material capable of improving durability of a non-aqueous electrolyte secondary battery.

The positive electrode active material for a non-aqueous electrolyte secondary battery in one aspect of the present disclosure includes a lithium transition metal composite oxide, wherein the lithium transition metal composite oxide contains Ni, Ca, and Sr, and includes secondary particles each formed by aggregation of primary particles, and in an element concentration distribution of a cross section of the lithium transition metal composite oxide as analyzed using time-of-flight secondary ion mass spectrometry, a ratio $I_{Sr_OUT}/I_{Sr_IN}$ of a normalized intensity $I_{Sr_OUT}$ of Sr on surfaces of the secondary particles to a normalized intensity $I_{Sr_IN}$ of Sr inside the secondary particles is greater than a ratio $I_{Ca_OUT}/I_{Ca_IN}$ of a normalized intensity $I_{Ca_OUT}$ of Ca on the surfaces of the secondary particles to a normalized intensity $I_{Ca_IN}$ of Ca inside the secondary particles.

The non-aqueous electrolyte secondary battery in one aspect of the present disclosure comprises a positive electrode including the positive electrode active material for a non-aqueous electrolyte secondary battery, a negative electrode, and a non-aqueous electrolyte.

According to the positive electrode active material for a non-aqueous electrolyte secondary battery in one aspect of the present disclosure, the durability of the non-aqueous electrolyte secondary battery can be improved.

### BRIEF DESCRIPTION OF DRAWINGS

FIG. 1 is a longitudinal sectional view of a non-aqueous electrolyte secondary battery as an example of an embodiment.

### DESCRIPTION OF EMBODIMENTS

Generally, a lithium transition metal composite oxide containing Ni as a main component is known as a high-capacity positive electrode active material. However, a lithium transition metal composite oxide having a Ni content ratio of greater than or equal to 70% is likely to cause a side reaction with a non-aqueous electrolyte, and durability may be a problem.

Patent Literature 1 discloses a technique for improving the charge-discharge cycle characteristics and safety of a secondary battery by using a positive electrode active material in which Sr forms a solid solution in an NCM-based lithium transition metal composite oxide containing Ni, Co, and Mn at a predetermined ratio. As a result of studies conducted by the

present inventors, however, it has been found that even if Sr forms a solid solution in a lithium transition metal composite oxide having a Ni content ratio of greater than or equal to 70%, the durability of the secondary battery may not be sufficiently improved.

As a result of further intensive studies, the present inventors have found that the durability can be improved by allowing Ca and Sr to be present inside and on the surfaces of the secondary particles that constitute the lithium transition metal composite oxide, and dispersing Ca more uniformly inside and on the surfaces of the secondary particles than Sr, while dispersing a relatively large amount of Sr on the surfaces of the secondary particles, probably because side reactions are suppressed while the retention of the non-aqueous electrolyte is improved.

Hereinafter, one aspect of an embodiment of the non-aqueous electrolyte secondary battery according to the present disclosure will be described in detail. Hereinafter, a cylindrical battery including a wound electrode assembly housed in a cylindrical outer case will be illustrated, but the electrode assembly is not limited to the wound-type, and may be a laminate electrode assembly in which a plurality of positive electrodes and a plurality of negative electrodes are alternately stacked one by one via separators. Furthermore, the outer case is not limited to a cylindrical shape, and may, for example, be rectangular or coin-shaped. The battery case may also be formed of a laminated sheet including a metal layer and a resin layer. In addition, the design of the non-aqueous electrolyte secondary battery according to the present disclosure is not limited to the design of the illustrated non-aqueous electrolyte secondary battery, and a known non-aqueous electrolyte secondary battery design may be applied.

FIG. 1 is an axial sectional view of a cylindrical secondary battery 10 as an example of an embodiment. As shown in FIG. 1, the secondary battery 10 comprises a wound electrode assembly 14, a non-aqueous electrolyte, and an outer case 16 that houses the electrode assembly 14 and the non-aqueous electrolyte. The electrode assembly 14 includes a positive electrode 11, a negative electrode 12, and a separator 13 and has the positive electrode 11 and the negative electrode 12 being wound with the separator 13. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The negative electrode 12 is formed to be one size larger than the positive electrode 11 to prevent precipitation of lithium. That is, the negative electrode 12 is formed to be longer than the positive electrode 11 in the longitudinal direction and the transverse direction. The two separators 13 are formed at least one size larger than the positive electrode 11 and disposed to sandwich the positive electrode 11, for example. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation,

the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the secondary battery 10, particularly, the positive electrode 11 will be described in detail.

The positive electrode 11 has, for example, a positive electrode core and a positive electrode mixture layer formed on the surface of the positive electrode core. The positive electrode mixture layer is preferably formed on both the surfaces of the positive electrode core. As the positive electrode core, a foil of a metal that is stable in the potential range of the positive electrode 11, such as aluminum or an aluminum alloy, and a film with the metal disposed on the surface layer, or the like can be used. The thickness of the positive electrode core is, for example, greater than or equal to 10 μm and less than or equal to 30 μm.

The positive electrode mixture layer includes, for example, a positive electrode active material, a conductive agent, and a binder. The thickness of the positive electrode mixture layer is greater than or equal to 10 μm and less than or equal to 150 μm, for example, on one side of the positive electrode core. The positive electrode 11 can be produced, for example, by applying a positive electrode mixture slurry including a positive electrode active material and a conductive agent on the surface of the positive electrode core, drying the coating, and then rolling the dried coating to form the positive electrode mixture layer on both surfaces of the positive electrode core.

Examples of the conductive agent included in the positive electrode mixture layer include carbon-based particles such as carbon black (CB) including acetylene black (AB) and Ketjenblack, Ketjenblack, carbon nanotubes (CNT), graphene, and graphite. These may be used singly or in combinations of two or more thereof. The content ratio of the conductive agent in the positive electrode mixture layer is, for example, greater than or equal to 0.1 mass% and less than or equal to 10 mass% relative to the total mass of the positive electrode mixture layer.

Examples of the binder included in the positive electrode mixture layer include a fluororesin such as polytetrafluoroethylene (PTFE) and polyvinylidene fluoride (PVDF), a polyimide resin, an acrylic resin, a polyolefin resin, and polyacrylonitrile (PAN). These may be used singly or in combinations of two or more thereof. The content ratio of the binder in the positive electrode mixture layer is, for example, greater than or equal to 0.1 mass% and less than or equal to 10 mass% relative to the total mass of the positive electrode mixture layer.

The positive electrode active material included in the positive electrode mixture layer includes a lithium transition metal composite oxide. The lithium transition metal composite oxide contain Ni, Ca, and Sr

The content ratio of Ni in the lithium transition metal composite oxide is greater than or equal to 70 mol% relative to the total number of moles of metal elements excluding Li. This can increase the battery capacity. The content ratio of Ni is preferably greater than or equal to 85 mol%, and more preferably greater than or equal to 90 mol%. From the viewpoint of stability of the structure, the content ratio of Ni is preferably less than or equal to 98 mol%.

The content ratio of Ca in the lithium transition metal composite oxide is preferably greater than or equal to 0.01 mol% and less than or equal to 1 mol%, more preferably greater than or equal to 0.1 mol% and less than or equal to 0.5 mol%, and still more preferably greater than or equal to 0.2 mol% and less than or equal to 0.4 mol%, relative to the total number of moles of metal elements excluding Li.

The content ratio of Sr in the lithium transition metal composite oxide is preferably greater than or equal to 0.01 mol% and less than or equal to 1 mol%, more preferably greater than or equal to 0.02 mol% and less than or equal to 0.5 mol%, and still more preferably greater than or equal to 0.05 mol% and less than or equal to 0.2 mol%, relative to the total number of moles of metal elements excluding Li.

The lithium transition metal composite oxide may further include one or more elements selected from the group consisting of Co, Al, and Mn. The content ratio of each of Co, Al, and Mn in the lithium transition metal composite oxide is, for example, greater than or equal to 0 mol% and less than or equal to 30 mol% relative to the total number of moles of metal elements excluding Li. The total content ratio of Co, Al, and Mn is, for example, greater than or equal to 0 mol% and less than or equal to 30 mol%.

The lithium transition metal composite oxide may further include one or more elements selected from the group consisting of Nb, Ti, Zr, W, Si, and Mo. The content ratio of each of Nb, Ti, Zr, W, Si, and Mo in the lithium transition metal composite oxide is, for example, greater than or equal to 0 mol% and less than or equal to 1 mol% relative to the total number of moles of metal elements excluding Li. The total content ratio of Nb, Ti, Zr, W, Si, and Mo is, for example, greater than or equal to 0 mol% and less than or equal to 5 mol%.

The lithium transition metal composite oxide is, for example, a composite oxide represented by the general formula $Li_aNi_xM1_yM2_zCa_sSr_tO_{2-b}$, wherein $0.8 \leq a \leq 1.2$, $0.70 \leq x \leq 0.98$, $0 \leq y \leq 0.30$, $0 \leq z \leq 0.05$, $0.0001 \leq s \leq 0.01$, $0.0001 \leq t \leq 0.01$, $0 \leq b \leq 0.05$, $x + y + z + s + t = 1$, M1 represents one or more elements selected from the group consisting of Co, Al, and Mn, and M2 represents one or more elements selected from the group consisting of Nb, Ti, Zr, W, Si, and Mo. The proportion of metal elements contained in the lithium transition metal composite oxide can be measured using, for example, an inductively coupled plasma atomic emission spectrometer (ICP-AES).

The lithium transition metal composite oxide includes secondary particles each formed by aggregation of primary

particles. The particle diameter of the primary particles is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution reaches 50% from the smaller particle side, which is also referred to as the median diameter. The particle size distribution of the secondary particles can be measured using a laser diffraction particle size distribution measuring device (e.g., MT3000II, manufactured by MicrotracBEL Corp.), with water used as the dispersion medium.

Ca and Sr are present on the surfaces of the secondary particles and inside the secondary particles. Ca and Sr are present, for example, on the surfaces of the primary particles inside the secondary particles, but does not form a solid solution inside the primary particles. Thus, the effect of suppressing a side reaction between the non-aqueous electrolyte and the lithium transition metal composite oxide becomes remarkable. Ca may be present as a Ca-containing compound on the surfaces of the secondary particles and inside the secondary particles. Examples of the Ca-containing compound include CaO, $Ca(OH)_2$, and $CaCO_3$. Sr may be present as a Sr-containing compound on the surfaces of the secondary particles and inside the secondary particles. Examples of the Sr-containing compound include SrO, $Sr(OH)_2$, and $SrCO_3$. The presence of Ca and Sr on the surfaces of the secondary particles and inside the secondary particles can be confirmed by, for example, energy dispersive X-ray spectroscopy (TEM-EDX) in addition to the time-of-flight secondary ion mass spectrometry described below.

In the element concentration distribution of a cross section of the lithium transition metal composite oxide as analyzed using time-of-flight secondary ion mass spectrometry (TOF-SIMS), the ratio $I_{Sr_OUT}/I_{Sr_IN}$ of the normalized intensity $I_{Sr_OUT}$ of Sr on surfaces of the secondary particles to the normalized intensity $I_{Sr_IN}$ of Sr inside the secondary particles is greater than the ratio $I_{Ca_OUT}/I_{Ca_IN}$ of the normalized intensity $I_{Ca_OUT}$ of Ca on the surfaces of the secondary particles to the normalized intensity $I_{Ca_IN}$ of Ca inside the secondary particles (hereinafter, the ratio $I_{Ca_OUT}/I_{Ca_IN}$ is referred to as the normalized intensity ratio of Ca, and the ratio $I_{Sr_OUT}/I_{Sr_IN}$ is referred to as the normalized intensity ratio of Sr.). As a result, the secondary battery has improved durability, presumably because the surfaces of the primary particles including the surfaces of the secondary particles are appropriately protected on the surfaces of the secondary particles and inside the secondary particles.

The normalized intensity ratio of Ca and Sr is obtained by measurement under the following conditions using a time-of-flight secondary ion mass spectrometer (TOF-SIMS5, IONTOF GmbH):

Primary ion: $Bi_3^+$
Ion voltage: 30 kV
Ion current: 0.03 pA @ 100 us
Observation range: 50 μm × 50 μm
Mass range: 60 us (less than or equal to 310 amu)
Detection: 4 frames/scan, 150 scan

An image showing the concentration distributions of Ni, Ca, and Sr obtained by the above measurement is divided into 256 × 256 pixels, and the detection intensities of Ni, Ca, and Sr are calculated for each pixel. Furthermore, the ratio of the detection intensity of Ca to the detection intensity of Ni is calculated as a normalized intensity $I_{Ca}$ of Ca, and the ratio of the detection intensity of Sr to the detection intensity of Ni is calculated as a normalized intensity $I_{Sr}$ of Sr.

A range up to 0.5 μm inside the surfaces of the secondary particles recognized from the images is defined as the surfaces of the secondary particles, and pixels (hereinafter referred to as surface pixels) included in the surfaces of the secondary particles are defined. The set of $I_{Ca}$ corresponding to each surface pixel is $I_{Ca_OUT}$, and the set of $I_{Sr}$ corresponding to each surface pixel is $I_{Sr_OUT}$. Further, the inside of the surfaces of the secondary particles specified above is defined as the inside of the secondary particles, and pixels (hereinafter referred to as internal pixels) included in the inside of the secondary particles are defined. The set of $I_{Ca}$ corresponding to each internal pixel is $I_{Ca_IN}$ and the set of $I_{Sr}$ corresponding to each surface pixel is $I_{Sr_IN}$. The normalized intensity ratio of Ca ($I_{Ca_OUT}/I_{Ca_IN}$) and the normalized intensity ratio of Sr ($I_{Sr_OUT}/I_{Sr_IN}$) are calculated from the normalized intensities of Ca and Sr on the surfaces of the secondary particles and inside the secondary particles thus obtained. The sample for cross section observation may be a sample in which a lithium transition metal composite oxide is embedded in a resin or the like, or a positive electrode mixture layer including the lithium transition metal composite oxide.

The normalized intensity ratio of Ca is preferably greater than or equal to 1. The normalized intensity ratio of Ca is, for example, greater than or equal to 1 and less than or equal to 5. The normalized intensity ratio of Sr is preferably greater than or equal to 5. The normalized intensity ratio of Sr is, for example, greater than or equal to 5 and less than or equal to 10. A ratio of the normalized intensity of Sr to the normalized intensity of Ca (normalized intensity of Sr/normalized intensity of Ca) is, for example, greater than or equal to 1.5 and less than or equal to 5.

A metal compound including a metal element such as W, Zr, Al, or a rare earth element may be present on the surfaces of the lithium transition metal composite oxide. Examples of the compound containing W include $WO_3$. Examples of the compound containing Al include $Al_2O_3$. Examples of the compound containing Zr include $ZrO_2$, $Zr(OH)_4$, $Zr(CO_3)_2$, and $Zr(SO_4)_2 \cdot 4H_2O$. Examples of the compound containing rare-earth include oxides, hydroxides, carbonates, sulfates, nitrates, and phosphates of rare earths. The metal compound may contain these metal elements and Ca or Sr, and examples thereof include $SrAlO_4$ and $CaAlO_4$. The metal compound may further contain Li, and examples thereof include lithium tungstate.

A non-metal compound may be present on the surfaces of the lithium transition metal composite oxide. The non-metal compound includes, for example, one or more non-metal elements selected from the group consisting of P and B. Examples of the compound containing P include $Li_{3-x}H_xPO_4$ ($0 \leq x \leq 3$). Examples of the compound containing B include $H_3BO_3$, $Li_3BO_3$, and $Li_2B_4O_7$.

The pore volume of the lithium transition metal composite oxide is, for example, greater than or equal to 0.1 mL/g and 0.5 mL/g. The pore volume of the lithium transition metal composite oxide can be measured by mercury intrusion porosimetry using a mercury porosimeter (e.g., AutoPore IV 9510 manufactured by Micromeritics Instrument Corporation).

The lithium transition metal composite oxide may have a layered structure. Examples of the layered structures of the lithium transition metal composite oxide include a layered structure belonging to the space group R-3m and a layered structure belonging to the space group C2/m. From the viewpoint of high capacity, stability of the crystal structure, and the like, the lithium transition metal composite oxide preferably has a layered structure belonging to the space group R-3m. The layered structure of the lithium transition metal composite oxide may include a transition metal layer, a Li layer and an oxygen layer.

The positive electrode active material preferably includes a sulfonate compound present on the surface of the lithium transition metal composite oxide. The sulfonate compound is represented, for example, by the general formula I, and the presence of the sulfonate compound on the surface of the lithium transition metal composite oxide facilitates the $Li^+$ insertion/extraction with the coating including the sulfonate compound, thereby exerting an effect of reducing the direct current resistance (DCIR):

[Formula 1]

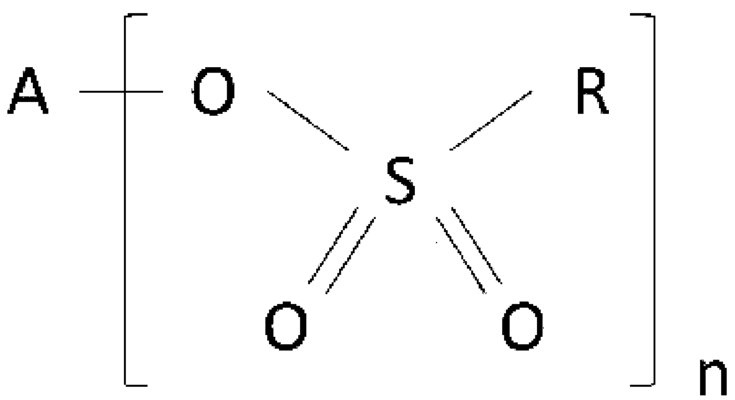

(I)

wherein A represents a group I element or a group II element, R represents a hydrocarbon group, and n represents 1 or 2.

In the general formula I, A preferably represents a group 1 element and more preferably Li. Thus, the direct current resistance can be further reduced. Note that when A represents a group 1 element, n = 1.

In the general formula I, R preferably represents an alkyl group. R more preferably represents an alkyl group having less than or equal to 5 carbon atoms, still more preferably an alkyl group having less than or equal to 3 carbon atoms, and particularly preferably a methyl group. In addition, A part of carbon-bonded hydrogens in R may be substituted with fluorine. However, not all of the carbon-bonded hydrogens in R are substituted with fluorine. The smaller the molecular weight of R, the lower the direct current resistance tends to be.

Examples of the sulfonate compound include lithium methanesulfonate, lithium ethanesulfonate, lithium propanesulfonate, sodium methanesulfonate, magnesium methanesulfonate, and lithium fluoromethanesulfonate.

The amount of the sulfonate compound present on the surface of the lithium transition metal composite oxide is preferably greater than or equal to 0.1 mass% and less than or equal to 2 mass%, and more preferably greater than or equal to 0.25 mass% and less than or equal to 1.0 mass% relative to the mass of the lithium transition metal composite oxide.

The presence of the sulfonate compound on the surfaces of the lithium transition metal composite oxide can be confirmed by Fourier transform infrared spectroscopy (FT-IR). In an infrared absorption spectrum obtained by FT-IR, the lithium transition metal composite oxide may have at least one absorption peak near 1238 $cm^{-1}$, 1175 $cm^{-1}$, 1065 $cm^{-1}$, and 785 $cm^{-1}$.

In an infrared absorption spectrum obtained by FT-IR, the lithium transition metal composite oxide including lithium methanesulfonate, for example, has absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are absorption peaks caused by SO stretching vibration derived from lithium methanesulfonate. The peak near 785 $cm^{-1}$ is an absorption peak caused by CS stretching vibration derived from lithium methanesulfonate.

In the lithium transition metal composite oxide in which a sulfonate compound other than lithium methanesulfonate is present on the surface, an absorption peak derived from the sulfonate compound can be identified in the same manner as in the lithium transition metal composite oxide in which lithium methanesulfonate is present on the surface. Note that the presence of the sulfonate compound on the surface of the lithium transition metal composite oxide can be confirmed by ICP, atomic absorption spectrometry, X-ray photoelectron spectroscopy (XPS), radiation XRD measurement, TOF-SIMS, or the like.

The positive electrode mixture layer may include, in addition to the positive electrode active material of the present embodiment, other positive electrode active materials. Examples of such other positive electrode active materials include lithium transition metal composite oxides containing Ni, Ca, and Sr, in which the normalized intensities of Ca and Sr do not satisfy the above relationship.

Next, an example of the method for producing the positive electrode active material according to the present embodiment will be described. Note that the production method described herein is merely an example, and the production method of the positive electrode active material is not limited to this method.

The production process of the positive electrode active material includes a synthesis step of obtaining a lithium transition metal composite oxide, a washing step of washing the lithium transition metal composite oxide obtained in the synthesis step with water and dehydrating the washed product to obtain a cake-like composition, an addition step of adding at least one of the group consisting of a sulfonate compound and a sulfonic acid solution to the cake-like composition, and a drying step of drying the cake-like composition to obtain a powder-like composition. The synthesis step includes, for example, a mixing step of mixing a metal oxide, a Li raw material, a Ca raw material, a Sr raw material and the like to obtain a mixture and a firing step of firing the mixture to obtain a lithium transition metal composite oxide.

In the mixing step, a metal oxide, a Li raw material, a Ca raw material, and a Sr raw material are mixed to afford a mixture. The metal oxide can be produced by adding an alkaline solution of, for example, sodium hydroxide dropwise to a solution of a metal salt containing Ni, Co, Al, Mn, or the like, while stirring, to adjust the pH to the alkaline side (e.g., greater than or equal to 8.5 and less than or equal to 12.5), thereby precipitating (coprecipitating) a composite hydroxide, and heat-treating the metal hydroxide. The firing temperature is not particularly limited, but is in the range of, for example, greater than or equal to 250°C and less than or equal to 600°C. Examples of Li raw materials include $Li_2CO_3$, LiOH, $Li_2O_2$, $Li_2O$, $LiNO_3$, $LiNO_2$, $Li_2SO_4$, $LiOH{\cdot}H_2O$, LiH, and LiF. Examples of Ca raw materials include $Ca(OH)_2$, $CaHPO_4$, $Ca(H_2PO_4)_2$, $Ca_3(PO_4)_2$, CaO, $CaCO_3$, $CaSO_4$, $Ca(NO_3)_2$, $CaCl_2$, and $CaAlO_4$. Examples of Sr raw materials include $Sr(OH)_2$, $SrHPO_4$, $Sr(H_2PO_4)_2$, $Sr_3(PO_4)_2$, SrO, $SrCO_3$, $SrSO_4$, $Sr(NO_3)_2$, $SrCl_2$, and $SrAlO_4$. By adjusting the average particle diameter (D50) of the Ca raw materials and the Sr raw materials, a relatively large amount of Sr can be dispersed on the surfaces of the secondary particles, and Ca can be dispersed more uniformly inside and on the surfaces of the secondary particles than Sr, making the effect of adding Ca and Sr more remarkable. In addition, at the time of mixing, M2 raw materials for adding M2, which represents one or more elements selected from the group consisting of Nb, Ti, Zr, W, Si and Mo, may be mixed. Examples of M2 raw materials include $Nb_2O_5$, $TiO_2$, $ZrO_2$, and $WO_3$.

A lithium transition metal composite oxide is obtained by firing the above mixture (firing step). The firing step is performed, for example, under an oxygen stream in a firing furnace. The firing step includes, for example, a first firing step of firing at a first temperature rising rate to a first set temperature of greater than or equal to 300°C and less than or equal to 600°C, and a second firing step of firing at a second temperature rising rate from the first set temperature to a second set temperature of greater than 600°C and less than or equal to 800°C. The first temperature rising rate is, for example, in a range of greater than or equal to 10°C/min and less than or equal to 100°C/ min, and the second temperature rising rate is, for example, in a range of greater than or equal to 0.1°C/min and less than 10°C/min. Since a relatively large amount of Sr can be dispersed on the surfaces of the secondary particles by increasing the first temperature rising rate, the value of the normalized intensity ratio of Sr may be increased. The normalized intensity ratio of Ca does not change as much as the normalized intensity ratio of Sr even if the first temperature rising rate is increased. Note that in each of the first firing step and the second firing step, subdivided temperature ranges may be further defined to perform multistage firing.

The synthesis step is not limited to the above step, and a precursor obtained by coprecipitating or mixing a compound such as a hydroxide, an oxide, or a carbonate compound including at least one of the group consisting of Ni, M1, and M2 (M1 represents one or more elements selected from the group consisting of Co, Al, and Mn, and M2 represents one or more elements selected from the group consisting of Nb, Ti, Zr, W, Si, and Mo) may be used instead of the metal oxide. In

the case where the precursor does not include compounds of M1, M2, or the like, the compounds of M1, M2, or the like may be added and mixed when the precursor, the Li raw materials, the Ca raw materials, and the Sr raw materials are mixed. These compounds may also be pulverized to appropriately change the particle shape or particle diameter for use, or may be used after adjusting the water content, including hydrates.

In the washing step, the lithium transition metal composite oxide is washed with water and dehydrated to obtain a cake-like composition. The lithium transition metal composite oxide may be in particulate form as obtained from the synthesis step. Through washing, unreacted portions of the lithium compound added in the synthesis step, as well as impurities other than the lithium compound, can be removed. During water washing, for example, greater than or equal to 300 g and less than or equal to 5000 g of lithium transition metal composite oxide may be charged per 1 L of water. Note that the water washing may be repeated a plurality of times, and the dehydration after the water washing can be performed by, for example, a filter press.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

In the addition step, at least one of the group consisting of a sulfonate compound and a sulfonic acid solution is added to the cake-like composition obtained in the washing step or the powder-like composition obtained in the drying step. Accordingly, the sulfonate compound can be adhered to the surface of the lithium-containing composite oxide. At least one of the group consisting of a sulfonate compound and a sulfonic acid solution is preferably added to the cake-like composition. The sulfonate compound may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The amount of the sulfonate compound or sulfonic acid added is preferably greater than or equal to 0.1 mass% and less than or equal to 2 mass% relative to the mass of the lithium-containing composite oxide. The concentrations of the sulfonic acid solution and the sulfonate compound solution are each, for example, greater than or equal to 0.5 mass% and less than or equal to 40 mass%. The addition step may be performed during or after the washing step, or during or after the drying step, and the timing of implementation may be appropriately changed.

A metal compound including one or more metal elements selected from the group consisting of W, Zr, Al, and rare earth elements, and a non-metal compound including one or more non-metal elements selected from the group consisting of P and B, may be adhered to the surface of the lithium-containing composite oxide by adding raw materials of the metal compound and the non-metal compound at any stage selected from during or after the synthesis step, during or after the washing step, during or after the drying step, or during the addition step. Examples of Zr raw materials include $Zr(OH)_4$, $ZrO_2$, $Zr(CO_3)_2$, and $Zr(SO_4)_2 \cdot 4H_2O$. These compounds may be pulverized to appropriately change the particle diameter or may be used after adjusting the water content, including hydrates. Examples of rare earth raw materials include rare earth oxides, hydroxides, and carbonates. Examples of W raw materials include tungsten oxide ($WO_3$) and lithium tungstates ($Li_2WO_4$, $Li_4WO_5$, $Li_6W_2O_9$). A solution containing W may also be used as a W raw material. Examples of Al raw materials include $Al_2O_3$, $Al(OH)_3$, and $Al_2(SO_4)_3$, although Al derived from the lithium-containing composite oxide may also be used. Examples of P raw materials include $Li_{3-x}H_xPO_4$ ($0 \leq x \leq 3$). Examples of B raw materials include $H_3BO_3$, $Li_3BO_3$, $Li_2B_4O_7$, and $LiBO_2$. When a liquid raw material is added after the drying step, a heat treatment may be performed to evaporate water.

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core by charging. When the negative electrode 12 has a negative electrode mixture layer, the negative electrode mixture layer is preferably formed on both the surfaces of the negative electrode core. As the negative electrode core, a metal foil that is stable in the potential range of the negative electrode 12, such as copper or a copper alloy, or a film with the metal disposed on a surface layer may be used. The thickness of the negative electrode core is, for example,

greater than or equal to 5 μm and less than or equal to 30 μm. The negative electrode mixture layer includes, for example, a negative electrode active material and a binder. The thickness of the negative electrode mixture layer is, for example, greater than or equal to 10 μm and less than or equal to 150 μm on one side of the negative electrode core. The negative electrode 12 can be produced, for example, by coating a negative electrode mixture slurry including a negative electrode active material and a binder on the surface of the negative electrode core, drying the coating, and rolling the dried coating to form the negative electrode mixture layer on both the surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has, for example, lithium ion conductivity. The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$,

$LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples and Comparative Examples, but the present disclosure is not limited to these Examples.

### <Example 1-1>

[Production of Positive Electrode Active Material]

A composite hydroxide represented by $[Ni_{0.92}Co_{0.04}Al_{0.04}](OH)_2$ obtained by a coprecipitation method was fired at 500°C for 8 hours to obtain a metal oxide including Ni, Co, and Al. Then, $Ca(OH)_2$ and $Sr(OH)_2$ were added to the metal oxide so that the molar ratio of Ca to the total amount of Ni, Co, and Al was 0.3 mol% and the molar ratio of Sr was 0.1 mol%, and lithium hydroxide monohydrate ($LiOH{\cdot}H_2O$) was further mixed so that the molar ratio of Li to the total amount of Ni, Co, Al, Ca, and Sr was 103 mol% to obtain a mixture. The average particle diameter (D50) of $Ca(OH)_2$ was 3 μm, and D50 of $Sr(OH)_2$ was 3 μm. Then, the mixture was fired from room temperature to 450°C at a first temperature rising rate of 30°C/min and then from 450°C to 720°C at a second temperature rising rate of 3°C/min under an oxygen stream at an oxygen concentration of 95% (flow rate of 5 L/min per kg of mixture), and a lithium transition metal composite oxide was obtained. The lithium transition metal composite oxide was washed with water and dried to afford the positive electrode active material of Example 1-1.

As a result of measuring the positive electrode active material using an ICP atomic emission spectrometer (ICP-AES), the elements shown in Table 1 below were confirmed except for Li and O. As a result of measuring the element concentration distribution in the cross section of the positive electrode active material using time-of-flight secondary ion mass spectrometry (TOF-SIMS), the normalized intensity ratio ($I_{Ca_OUT}/I_{Ca_IN}$) of Ca was 2.6, and the normalized intensity ratio ($I_{Sr_OUT}/I_{Sr_IN}$) of Sr was 8.3. The pore volume of the positive electrode active material was 0.20 mL/g.

[Production of Positive Electrode]

A positive electrode mixture slurry was prepared by mixing 95 parts by mass of the positive electrode active material, 3 parts by mass of acetylene black (AB), and 2 parts by mass of polyvinylidene fluoride (PVDF), and further adding an appropriate amount of N-methyl-2-pyrrolidone (NMP). Subsequently, the positive electrode mixture slurry was applied to both surfaces of a positive electrode core made of aluminum foil, the coating was dried, then rolled with a rolling roller, and cut into a predetermined electrode size to obtain a positive electrode. Note that an exposed portion, in which the surface of the positive electrode core was exposed, was provided in a part of the positive electrode.

[Production of Negative Electrode]

As a negative electrode active material, natural graphite was used. The negative electrode active material, sodium carboxymethyl cellulose (CMC-Na), and styrene-butadiene rubber (SBR) were mixed in an aqueous solution at a solid content mass ratio of 100:1:1 to prepare a negative electrode mixture slurry. Subsequently, the negative electrode mixture slurry was applied to both surfaces of a negative electrode core made of copper foil, the coating was dried, then rolled with a rolling roller, and cut into a predetermined electrode size to obtain a negative electrode. Note that an exposed portion, in which the surface of the negative electrode core was exposed, was provided in a part of the negative electrode.

[Preparation of Non-Aqueous Electrolyte]

Ethylene carbonate (EC), ethyl methyl carbonate (EMC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

A positive electrode lead was attached to the exposed portion of the positive electrode, a negative electrode lead was attached to the exposed portion of the negative electrode, and the positive electrode and the negative electrode were spirally wound with a polyolefin separator interposed therebetween, followed by press molding in a radial direction to produce a flat wound electrode assembly. This electrode assembly was housed in an outer case composed of an aluminum laminate sheet, the non-aqueous electrolyte was injected therein, and then an opening portion of the outer case was sealed to obtain a test cell.

[Evaluation of Durability]

The test cell was charged to 4.3 V at a constant current of 0.3 C under a temperature environment of 45°C and then charged to 0.02 C at a constant voltage of 4.3 V. Thereafter, the test cell was discharged to 2.5 V at a constant current of 0.5 C. This charge-discharge operation was defined as one cycle and repeated for 200 cycles. The durability of the test cell was determined using the following equation.

Durability = (discharge capacity at 200th cycle/discharge capacity at 1st cycle) $\times$ 100

[Evaluation of Direct Current Resistance]

The test cell was charged to 4.3 V at a constant current of 0.3 C under a temperature environment of 25°C and then charged to 0.02 C at a constant voltage of 4.3 V. Thereafter, the test cell was allowed to stand for 2 hours, followed by constant current discharge at 0.5 C for 10 seconds. The direct current resistance (DCIR) was calculated using the following equation, based on the open-circuit voltage (OCV), the closed-circuit voltage (CCV) measured 10 seconds after discharge, and the current value ($I_{10s}$) measured 10 seconds after discharge.

$$DCIR = (OCV - CCV)/I_{10s}$$

<Example 1-2>

A test cell was produced and evaluated in the same manner as in Example 1-1, except that powder-like lithium methanesulfonate was added to the lithium transition metal composite oxide after washing with water in the production of the positive electrode active material. The amount of lithium methanesulfonate added was 0.5 mass% relative to the mass of the lithium transition metal composite oxide.

<Example 1-3>

A test cell was produced and evaluated in the same manner as in Example 1-2, except that the Ca raw material was changed to $Ca(OH)_2$ having a D50 of 1 μm in the production of the positive electrode active material.

<Example 1-4>

A test cell was produced and evaluated in the same manner as in Example 1-2, except that the Sr raw material was changed to $Sr(OH)_2$ having a D50 of 1 μm in the production of the positive electrode active material.

<Comparative Example 1-1>

A test cell was produced and evaluated in the same manner as in Example 1-1, except that the first temperature rising rate was changed to 5°C/min in the production of the positive electrode active material.

<Comparative Example 1-2>

A test cell was produced and evaluated in the same manner as in Example 1-2, except that the first temperature rising rate was changed to 5°C/min in the production of the positive electrode active material.

<Comparative Example 1-3>

In the production of the positive electrode active material, a composite hydroxide represented by $[Ni_{0.92}Co_{0.04}Al_{0.04}](OH)_2$ obtained by a coprecipitation method was fired at 500°C for 12 hours to obtain a metal oxide including Ni, Co, and Al. A test cell was produced and evaluated in the same manner as in Example 1-2, except that the first temperature rising rate was changed to 5°C/min.

<Example 2-1>

A test cell was produced and evaluated in the same manner as in Example 1-1, except that a composite hydroxide represented by $[Ni_{0.90}Co_{0.05}Mn_{0.05}](OH)_2$ obtained by a coprecipitation method was used instead of a metal oxide, the Ca raw material was changed to $Ca(OH)_2$ having a D50 of 1 μm, and the Sr raw material was changed to $Sr(OH)_2$ having a D50 of 1 μm in the production of the positive electrode active material.

<Examples 2-2 to 2-5>

A test cell was produced and evaluated in the same manner as in Example 2-1, except that in the production of the positive electrode active material, $WO_3$, $Nb_2O_5$, $TiO_2$, or $ZrO_2$ was added to produce a mixture so that the molar ratio of W, Nb, Ti, or Zr to the total amount of Ni, Co, and Mn was the value shown in Table 2, and the powder-like lithium methanesulfonate was added to the lithium transition metal composite oxide after washing with water. The amount of lithium methanesulfonate added was 0.5 mass% relative to the mass of the lithium transition metal composite oxide.

<Comparative Example 2-1>

A test cell was produced and evaluated in the same manner as in Example 2-1, except that in the production of the positive electrode active material, the Ca raw material was changed to $Ca(OH)_2$ having a D50 of 3 μm, and the Sr raw material was changed to $Sr(OH)_2$ having a D50 of 3 μm, and the first temperature rising rate was changed to 5°C/min.

<Comparative Examples 2-2 to 2-5>

A test cell was produced and evaluated in the same manner as in Comparative Example 2-1, except that in the

production of the positive electrode active material, $WO_3$, $Nb_2O_5$, $TiO_2$, or $ZrO_2$ was added to produce a mixture so that the molar ratio of W, Nb, Ti, or Zr to the total amount of Ni, Co, and Mn was the value shown in Table 2, and in Comparative examples 2-3 and 2-4, the powder-like lithium methanesulfonate was further added to the lithium transition metal composite oxide after washing with water. The amount of lithium methanesulfonate added was 0.5 mass% relative to the mass of the lithium transition metal composite oxide.

<Example 3-1>

A test cell was produced and evaluated in the same manner as in Example 1-2, except that a composite hydroxide represented by $[Ni_{0.90}Mn_{0.10}](OH)_2$ obtained by a coprecipitation method was used instead of a metal oxide, the Ca raw material was changed to $Ca(OH)_2$ having a D50 of 1 μm, and the Sr raw material was changed to $Sr(OH)_2$ having a D50 of 1 μm in the production of the positive electrode active material.

<Examples 3-2 to 3-5>

A test cell was produced and evaluated in the same manner as in Example 3-1, except that in the production of the positive electrode active material, $WO_3$, $Nb_2O_5$, $TiO_2$, or $ZrO_2$ was added to produce a mixture so that the molar ratio of W, Nb, Ti, or Zr to the total amount of Ni, Co, and Mn was the value shown in Table 3.

<Comparative Examples 3-1 to 3-5>

A test cell was produced and evaluated in the same manner as in Example 3-1 except for the following in the production of the positive electrode active material,

(1) The Ca raw material was changed to $Ca(OH)_2$ having a D50 of 3 μm, and the Sr raw material was changed to $Sr(OH)_2$ having a D50 of 3 μm.
(2) In Comparative Examples 3-1 and 3-2, lithium methanesulfonate was not added.
(3) The first temperature rising rate was changed to 5°C/min.

Tables 1 to 3 separately show the evaluation results of the test cells in Examples and Comparative Examples. Tables 1 to 3 each also show the pore volume of the positive electrode active material. The durability and the direct current resistance of the test cells other than Comparative Example 1-1 in Table 1 were each expressed relatively, taking the durability and direct current resistance of the test cell in Comparative Example 1-1 as 100. The durability and the direct current resistance of the test cells other than Comparative Example 2-4 in Table 2 were each expressed relatively, taking the durability and direct current resistance of the test cell in Comparative Example 2-4 as 100. The durability and the direct current resistance of the test cells other than Comparative Example 3-5 in Table 3 were each expressed relatively, taking the durability and direct current resistance of the test cell in Comparative Example 3-5 as 100.

[Table 1]

| | Metal oxide [mol%] | | | | Additive substance [mol%] | | | Normalized intensity ratio | | | Amount of lithium methanesulfonate added [mass%] | Pore volume [mL/g] | Durability | Direct current resistance |
|---|---|---|---|---|---|---|---|---|---|---|---|---|---|---|
| | Ni | Co | Al | Mn | M2 | Ca | Sr | Ca | Sr | Sr/Ca | | | | |
| Example 1-1 | 92 | 4 | 4 | 0 | - | 0.3 | 0.1 | 2.6 | 8.3 | 3.2 | - | 0.20 | 110 | 100 |
| Example 1-2 | 92 | 4 | 4 | 0 | - | 0.3 | 0.1 | 2.4 | 7.8 | 3.3 | 0.5 | 0.18 | 107 | 97 |
| Example 1-3 | 92 | 4 | 4 | 0 | - | 0.3 | 0.1 | 1.8 | 5.6 | 3.1 | 0.5 | 0.20 | 104 | 94 |
| Example 1-4 | 92 | 4 | 4 | 0 | - | 0.3 | 0.1 | 2.0 | 6.5 | 3.3 | 0.5 | 0.19 | 106 | 96 |
| Comparative Example 1-1 | 92 | 4 | 4 | 0 | - | 0.3 | 0.1 | 2.2 | 1.0 | 0.45 | - | 0.19 | 100 | 100 |
| Comparative Example 1-2 | 92 | 4 | 4 | 0 | - | 0.3 | 0.1 | 1.5 | 1.2 | 0.80 | 0.5 | 0.25 | 97 | 98 |
| Comparative Example 1-3 | 92 | 4 | 4 | 0 | - | 0.3 | 0.1 | 5.2 | 4.9 | 0.94 | 0.5 | 0.14 | 85 | 98 |

[Table 2]

| | Metal oxide [mol%] | | | | Additive substance [mol %] | | | Normalized intensity ratio | | | Amount of lithium methanesulfonate added [mass%] | Pore volume [mL/g] | Durability | Direct current resistance |
|---|---|---|---|---|---|---|---|---|---|---|---|---|---|---|
| | Ni | Co | Al | Mn | M2 | Ca | Sr | Ca | Sr | Sr/Ca | | | | |
| Example 2-1 | 90 | 5 | 0 | 5 | - | 0.3 | 0.1 | 2.1 | 7.8 | 3.7 | - | 0.20 | 106 | 100 |
| Example 2-2 | 90 | 5 | 0 | 5 | W 0.5 | 0.3 | 0.1 | 3.5 | 7.6 | 2.2 | 0.5 | 0.24 | 106 | 92 |
| Example 2-3 | 90 | 5 | 0 | 5 | Nb 0.5 | 0.3 | 0.1 | 3.0 | 6.7 | 2.2 | 0.5 | 0.23 | 104 | 93 |
| Example 2-4 | 90 | 5 | 0 | 5 | Ti 0.5 | 0.3 | 0.1 | 3.2 | 7.4 | 2.3 | 0.5 | 0.19 | 107 | 95 |
| Example 2-5 | 90 | 5 | 0 | 5 | Zr 0.5 | 0.3 | 0.1 | 3.2 | 7.0 | 2.2 | 0.5 | 0.20 | 107 | 93 |
| Comparative Example 2-1 | 90 | 5 | 0 | 5 | - | 0.3 | 0.1 | 1.6 | 0.9 | 0.56 | - | 0.23 | 98 | 105 |
| Comparative Example 2-2 | 90 | 5 | 0 | 5 | W 0.5 | 0.3 | 0.1 | 4.5 | 1.6 | 0.36 | - | 0.19 | 96 | 104 |
| Comparative Example 2-3 | 90 | 5 | 0 | 5 | Nb 0.5 | 0.3 | 0.1 | 2.2 | 1.0 | 0.45 | 0.5 | 0.21 | 93 | 102 |
| Comparative Example 2-4 | 90 | 5 | 0 | 5 | Ti 0.5 | 0.3 | 0.1 | 1.1 | 1.0 | 0.91 | 0.5 | 0.24 | 100 | 100 |
| Comparative Example 2-5 | 90 | 5 | 0 | 5 | Zr 0.5 | 0.3 | 0.1 | 1.2 | 0.9 | 0.75 | 0.5 | 0.23 | 100 | 100 |

[Table 3]

| | Metal oxide [mol%] | | | | Additive substance [mol%] | | | Normalized intensity ratio | | | Amount of lithium methanesulfonate added [mass%] | Pore volume [mL/g] | Durability | Direct current resistance |
|---|---|---|---|---|---|---|---|---|---|---|---|---|---|---|
| | Ni | Co | Al | Mn | M2 | Ca | Sr | Ca | Sr | Sr/Ca | | | | |
| Example 3-1 | 90 | 0 | 0 | 10 | - | 0.3 | 0.1 | 1.8 | 7.4 | 4.1 | 0.5 | 0.20 | 106 | 100 |
| Example 3-2 | 90 | 0 | 0 | 10 | W 0.5 | 0.3 | 0.1 | 4.3 | 8.0 | 1.9 | 0.5 | 0.23 | 106 | 92 |
| Example 3-3 | 90 | 0 | 0 | 10 | Nb 0.5 | 0.3 | 0.1 | 3.0 | 6.7 | 2.2 | 0.5 | 0.24 | 104 | 93 |
| Example 3-4 | 90 | 0 | 0 | 10 | Ti 0.5 | 0.3 | 0.1 | 3.2 | 7.4 | 2.3 | 0.5 | 0.20 | 107 | 95 |
| Example 3-5 | 90 | 0 | 0 | 10 | Zr 0.5 | 0.3 | 0.1 | 2.8 | 9.4 | 3.4 | 0.5 | 0.21 | 108 | 95 |
| Comparative Example 3-1 | 90 | 0 | 0 | 10 | - | 0.3 | 0.1 | 1.6 | 0.8 | 0.50 | - | 0.22 | 98 | 105 |
| Comparative Example 3-2 | 90 | 0 | 0 | 10 | W 0.5 | 0.3 | 0.1 | 3.4 | 1.2 | 0.35 | - | 0.18 | 96 | 101 |
| Comparative Example 3-3 | 90 | 0 | 0 | 10 | Nb 0.5 | 0.3 | 0.1 | 2.9 | 1.2 | 0.41 | 0.5 | 0.22 | 99 | 101 |
| Comparative Example 3-4 | 90 | 0 | 0 | 10 | Ti 0.5 | 0.3 | 0.1 | 2.0 | 1.7 | 0.85 | 0.5 | 0.18 | 100 | 103 |
| Comparative Example 3-5 | 90 | 0 | 0 | 10 | Zr 0.5 | 0.3 | 0.1 | 1.1 | 1.0 | 0.91 | 0.5 | 0.17 | 100 | 100 |

In Tables 1 to 3, the test cells in Examples have improved durability as compared with the test cells in Comparative Examples. Therefore, it is understood that the durability is improved when a lithium transition metal composite oxide having a normalized intensity ratio ($I_{Sr_OUT}/I_{Sr_IN}$) of Sr larger than a normalized intensity ratio ($I_{Ca_OUT}/I_{Ca_IN}$) of Ca is included in the positive electrode active material. In addition, when the positive electrode active material contains a sulfonate compound on the surface of the lithium transition metal composite oxide, the direct current resistance can be reduced.

The present disclosure will be further described with reference to embodiments below.

Constitution 1:

A positive electrode active material for a non-aqueous electrolyte secondary battery, including:

a lithium transition metal composite oxide, wherein
the lithium transition metal composite oxide contains Ni, Ca, and Sr, and includes secondary particles each formed by aggregation of primary particles, and
in an element concentration distribution of a cross section of the lithium transition metal composite oxide as analyzed using time-of-flight secondary ion mass spectrometry, a ratio $I_{Sr_OUT}/I_{Sr_IN}$ of a normalized intensity $I_{Sr_OUT}$ of Sr on surfaces of the secondary particles to a normalized intensity $I_{Sr_IN}$ of Sr inside the secondary particles is greater than a ratio $I_{Ca_OUT}/I_{Ca_IN}$ of a normalized intensity $I_{Ca_OUT}$ of Ca on the surfaces of the secondary particles to a normalized intensity $I_{Ca_IN}$ of Ca inside the secondary particles.

Constitution 2:

The positive electrode active material for a non-aqueous electrolyte secondary battery according to Constitution 1, wherein a content ratio of Ni in the lithium transition metal composite oxide is greater than or equal to 70 mol% relative to a total number of moles of metal elements excluding Li in the lithium transition metal composite oxide.

Constitution 3:

The positive electrode active material for a non-aqueous electrolyte secondary battery according to Constitution 1 or 2, wherein the lithium transition metal composite oxide further includes one or more elements selected from the group consisting of Co, Al, and Mn.

Constitution 4:

The positive electrode active material for a non-aqueous electrolyte secondary battery according to any one of Constitutions 1 to 3, wherein the lithium transition metal composite oxide further includes one or more elements selected from the group consisting of Nb, Ti, Zr, W, Si, and Mo.

Constitution 5:

The positive electrode active material for a non-aqueous electrolyte secondary battery according to any one of Constitutions 1 to 4, wherein $I_{Ca_OUT}/I_{Ca_IN}$ is greater than or equal to 1.

Constitution 6:

The positive electrode active material for a non-aqueous electrolyte secondary battery according to any one of Constitutions 1 to 5, wherein a pore volume of the lithium transition metal composite oxide is greater than or equal to 0.1 mL/g and 0.5 mL/g.

Constitution 7:

The positive electrode active material for a non-aqueous electrolyte secondary battery according to any one of Constitutions 1 to 6, including a sulfonate compound present on a surface of the lithium transition metal composite oxide, wherein
the sulfonate compound is represented by the general formula I:

[Formula 2]

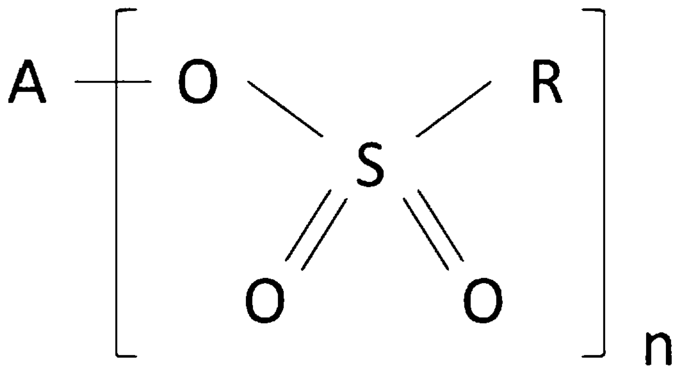

(I)

wherein A represents a group I element or a group II element, R represents a hydrocarbon group, and n represents 1 or 2.

Constitution 8:

The positive electrode active material for a non-aqueous electrolyte secondary battery according to Constitution 7, wherein A represents a group I element.
Constitution 9: The positive electrode active material for a non-aqueous electrolyte secondary battery according to Constitution 7, wherein A represents Li.
Constitution 10: The positive electrode active material for a non-aqueous electrolyte secondary battery according to any one of Constitutions 7 to 9, wherein R represents an alkyl group.
Constitution 11: The positive electrode active material for a non-aqueous electrolyte secondary battery according to any one of Constitutions 7 to 9, wherein R represents a methyl group.
Constitution 12: The positive electrode active material for a non-aqueous electrolyte secondary battery according to any one of Constitutions 7 to 11, wherein an amount of the sulfonate compound present on a surface of the lithium transition metal composite oxide is greater than or equal to 0.1 mass% and less than or equal to 2 mass% relative to a mass of the lithium transition metal composite oxide.

Constitution 13:

A non-aqueous electrolyte secondary battery, comprising:

a positive electrode including the positive electrode active material for a non-aqueous electrolyte secondary battery according to any one of Constitutions 1 to 12;
a negative electrode; and
a non-aqueous electrolyte.

REFERENCE SIGNS LIST

10 Secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket

## Claims

**1.** A positive electrode active material for a non-aqueous electrolyte secondary battery, including:

a lithium transition metal composite oxide, wherein
the lithium transition metal composite oxide contains Ni, Ca, and Sr, and includes secondary particles each formed by aggregation of primary particles, and
in an element concentration distribution of a cross section of the lithium transition metal composite oxide as analyzed using time-of-flight secondary ion mass spectrometry, a ratio $I_{Sr_OUT}/I_{Sr_IN}$ of a normalized intensity

$I_{Sr_OUT}$ of Sr on surfaces of the secondary particles to a normalized intensity $I_{Sr_IN}$ of Sr inside the secondary particles is greater than a ratio $I_{Ca_OUT}/I_{Ca_IN}$ of a normalized intensity $I_{Ca_OUT}$ of Ca on the surfaces of the secondary particles to a normalized intensity $I_{Ca_IN}$ of Ca inside the secondary particles.

**2.** The positive electrode active material for a non-aqueous electrolyte secondary battery according to claim 1, wherein a content ratio of Ni in the lithium transition metal composite oxide is greater than or equal to 70 mol% relative to a total number of moles of metal elements excluding Li in the lithium transition metal composite oxide.

**3.** The positive electrode active material for a non-aqueous electrolyte secondary battery according to claim 1, wherein the lithium transition metal composite oxide further includes one or more elements selected from the group consisting of Co, Al, and Mn.

**4.** The positive electrode active material for a non-aqueous electrolyte secondary battery according to claim 1, wherein the lithium transition metal composite oxide further includes one or more elements selected from the group consisting of Nb, Ti, Zr, W, Si, and Mo.

**5.** The positive electrode active material for a non-aqueous electrolyte secondary battery according to claim 1, wherein $I_{Ca_OUT}/I_{Ca_IN}$ is greater than or equal to 1.

**6.** The positive electrode active material for a non-aqueous electrolyte secondary battery according to claim 1, wherein a pore volume of the lithium transition metal composite oxide is greater than or equal to 0.1 mL/g and 0.5 mL/g.

**7.** The positive electrode active material for a non-aqueous electrolyte secondary battery according to claim 1, including a sulfonate compound present on a surface of the lithium transition metal composite oxide, wherein the sulfonate compound is represented by the general formula I:

[Formula 1]

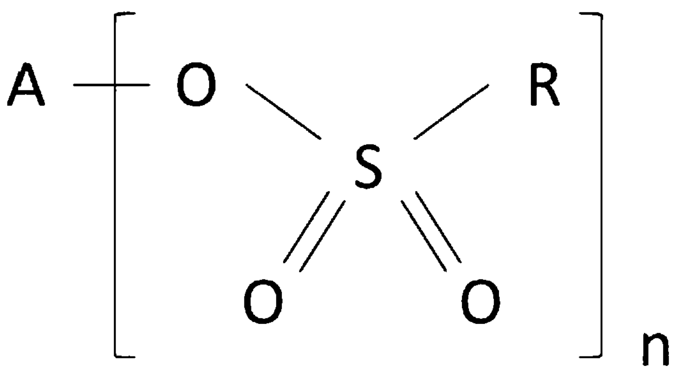

(I)

wherein A represents a group I element or a group II element, R represents a hydrocarbon group, and n represents 1 or 2.

**8.** The positive electrode active material for a non-aqueous electrolyte secondary battery according to claim 7, wherein A represents a group I element.

**9.** The positive electrode active material for a non-aqueous electrolyte secondary battery according to claim 7, wherein A represents Li.

**10.** The positive electrode active material for a non-aqueous electrolyte secondary battery according to claim 7, wherein R represents an alkyl group.

**11.** The positive electrode active material for a non-aqueous electrolyte secondary battery according to claim 7, wherein R represents a methyl group.

**12.** The positive electrode active material for a non-aqueous electrolyte secondary battery according to claim 7, wherein

an amount of the sulfonate compound present on a surface of the lithium transition metal composite oxide is greater than or equal to 0.1 mass% and less than or equal to 2 mass% relative to a mass of the lithium transition metal composite oxide.

**13.** A non-aqueous electrolyte secondary battery, comprising:

a positive electrode including the positive electrode active material for a non-aqueous electrolyte secondary battery according to any one of claims 1 to 12;
a negative electrode; and
a non-aqueous electrolyte.

Figure 1

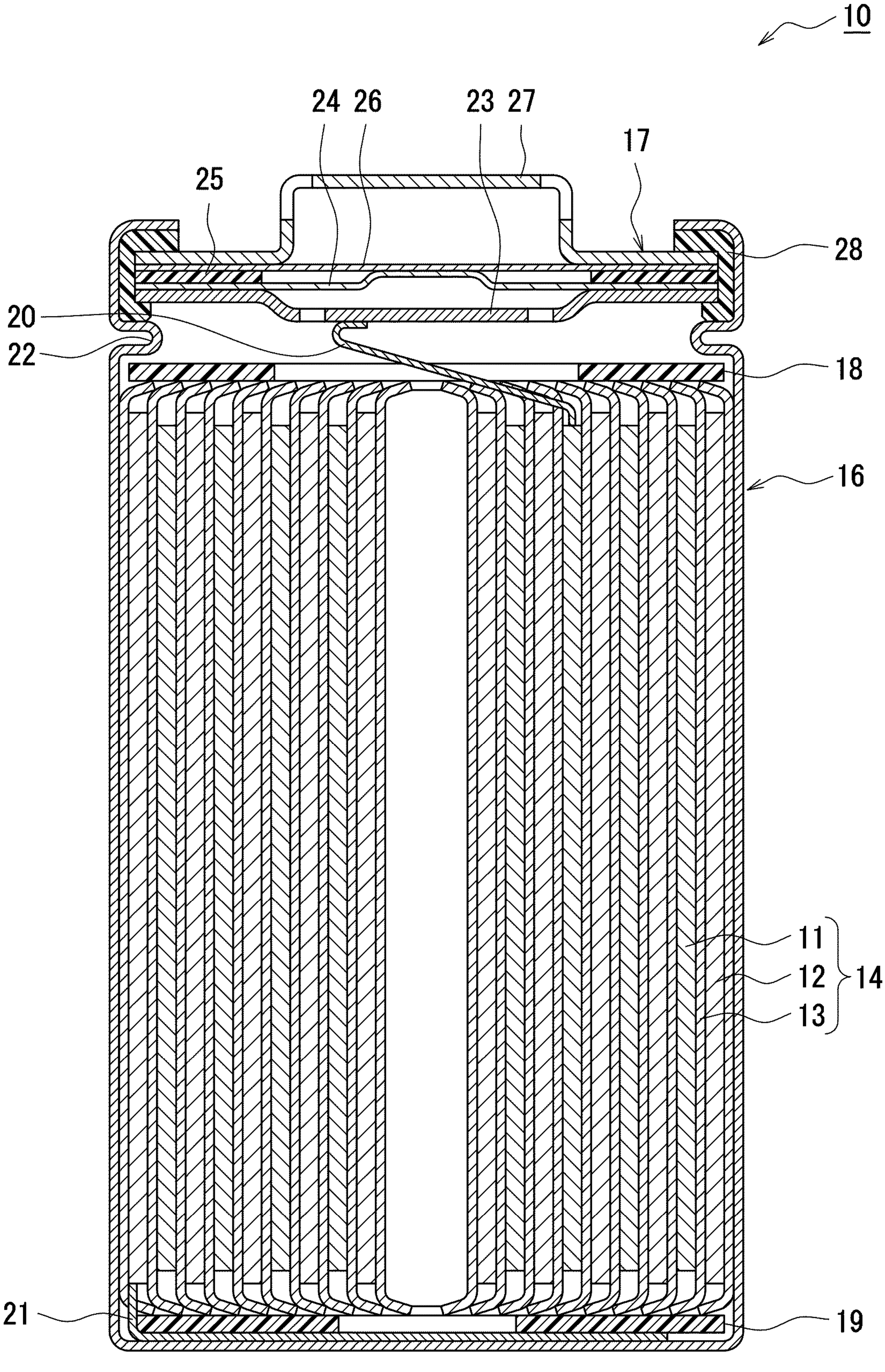

## INTERNATIONAL SEARCH REPORT

International application No.
**PCT/JP2024/018155**

**A. CLASSIFICATION OF SUBJECT MATTER**

***H01M 4/525***(2010.01)i; ***C01G 53/00***(2006.01)i; ***H01M 4/131***(2010.01)i; ***H01M 4/36***(2006.01)i
FI: H01M4/525; C01G53/00 A; H01M4/131; H01M4/36 C

According to International Patent Classification (IPC) or to both national classification and IPC

**B. FIELDS SEARCHED**

Minimum documentation searched (classification system followed by classification symbols)

H01M4/525; C01G53/00; H01M4/131; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/092182 A1 (PANASONIC INTELLECTUAL PROPERTY MANAGEMENT CO., LTD.) 05 May 2022 (2022-05-05) | 1-13 |
| A | WO 2021/152996 A1 (PANASONIC INTELLECTUAL PROPERTY MANAGEMENT CO., LTD.) 05 August 2021 (2021-08-05) | 1-13 |
| A | WO 2021/106324 A1 (PANASONIC INTELLECTUAL PROPERTY MANAGEMENT CO., LTD.) 03 June 2021 (2021-06-03) | 1-13 |
| A | JP 2019-169286 A (TDK CORPORATION) 03 October 2019 (2019-10-03) | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018155**

| Patent document cited in search report | Publication date (day/month/year) | Patent family member(s) | Publication date (day/month/year) |
|---|---|---|---|
| WO 2022/092182 A1 | 05 May 2022 | US 2023/0299282 A1<br>EP 4239743 A1<br>CN 116547847 A | |
| WO 2021/152996 A1 | 05 August 2021 | US 2023/0065418 A1<br>EP 4098623 A1<br>CN 115210909 A | |
| WO 2021/106324 A1 | 03 June 2021 | US 2023/0032577 A1<br>EP 4067310 A1<br>CN 114762150 A | |
| JP 2019-169286 A | 03 October 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6226430 B